# EUROPEAN PATENT APPLICATION

(11) **EP 2 808 564 A1**
(43) Date of publication of application: **03.12.2014**
(21) Application number: 14154544.2
(22) Date of filing: 10.02.2014
(51) Int. Cl.: F16B 2/04, F16B 2/06, F16L 3/24, H02G 3/00

(54) **Length adjustable construction apparatus**

(30) Priority: 31.05.2013 GB 201309751
(71) Applicant: Electrix International Limited, Bishop Auckland, County Durham DL14 6XP (GB)
(72) Inventor: Thompson, Malcom, Bishop Auckland, County Durham DL14 6XP (GB)
(74) Representative: Vinsome, Rex Martin

(57) **Abstract**

A construction apparatus 20 is disclosed. The apparatus is for connecting elongate members 12, such as conduit, trunking, pipes and the like to structural supports 10 that have a channel 26 therein, such as I-beams and H-beams. The apparatus includes surface engaging portions 34, 36 that engage opposing surfaces 28, 30 of the channel in the beam. There is also a body portion 38 connected to the surface engaging portions by legs 44 that can be moved relative to the body portion so that said surface engaging portions move in opposite directions to apply a gripping force to the opposing surfaces of the channel of the beam. Furthermore, there is a connecting portion for connecting the apparatus to the trunking or conduit etc.

## Description

The present invention relates to construction apparatus and to apparatus for connecting elongate members to a structural support beam or pillar, and relates particularly, but not exclusively, to a system for attaching trunking and conduit to an H- or I-beam for use in clean environments.

The use of trunking and conduit to protect electrical cables is well known and is used in many industries. In clean environments, such as those of the food and beverage preparation and pharmaceutical industries, it is commonplace to use trunking and conduit formed from stainless steel thereby giving it easy to clean surfaces. Such trunking and conduit systems have as many smooth and easy to clean surfaces as possible, and wherever feasible, eliminate tight corners, non-close fitting junctions and other dirt traps.

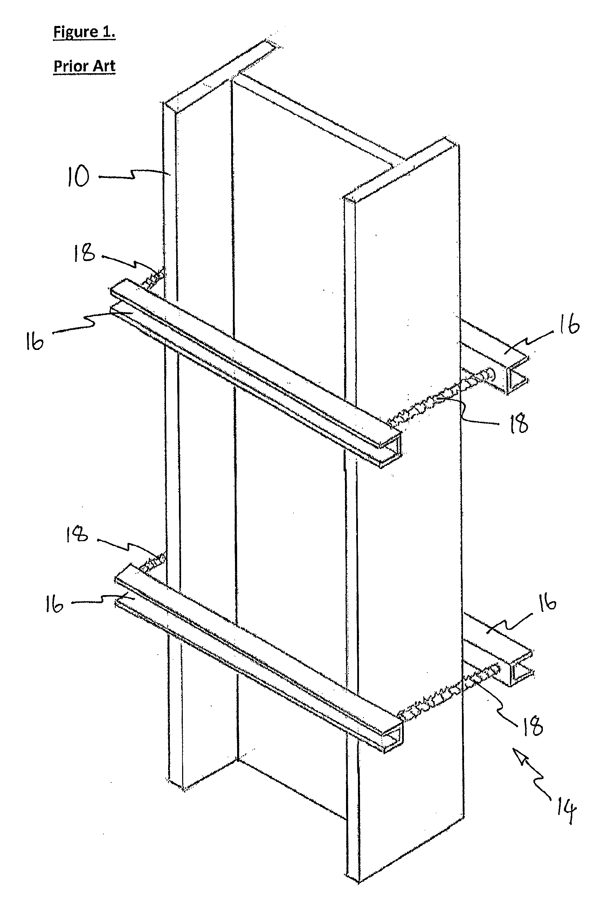

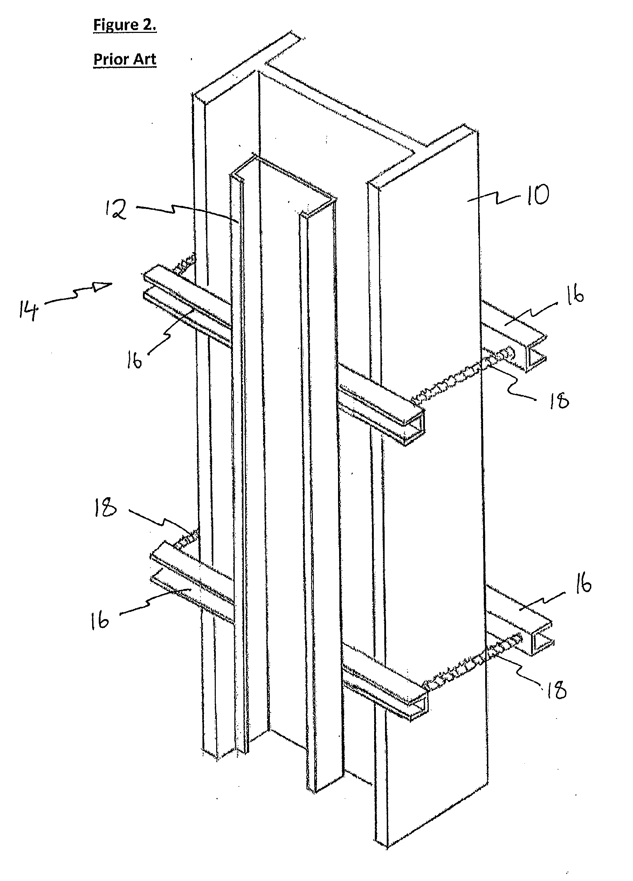

Many industrial buildings are constructed using a steel beam frame formed from rolled steel members having an "H" or "I" shaped cross-section. When such members are commonly referred to I-beams or H-beams although when forming a vertical support member are referred to as pillars. It is also commonplace for these beams to be left exposed within a building and to be used to conveniently carry sections of conduit and trunking as well as other utility supplies including cable trays, gas pipes and air lines. In order to maintain the integrity of the beam or pillar it is invariably the case that drilling holes through the ends or flange of the beam is forbidden. As a result, to attach trunking conduit or the other utilities mentioned to a beam or pillar, brackets, such as those shown in Figures 1 and 2, are commonly used. In these examples, the I-beam 10 has trunking 12 attached to it using brackets 14. The brackets 14 are formed from pairs of U-section steel 16 that are clamped into engagement with beam 10 using threaded rods 18 and nuts (not shown).

Such apparatus is particularly difficult to clean and is prone to collecting dirt. As a result, it is unsuitable for use in clean environments. Furthermore, when attached to a pillar the brackets and trunking extend far outside the area confined within the cross-section of the pillar and in particular, the brackets 14 represent a significant snag hazard for people or objects passing in close proximity to the brackets.

Preferred embodiments of the present invention seek to overcome the above described disadvantages of the prior art.

According to an aspect of the present invention, there is provided an apparatus for connecting elongate members to a structural support member having a channel therein, the apparatus comprising:-
surface engaging portions for engaging opposing surfaces of a channel formed in a structural support member ;
at least one body portion connected to said surface engaging portion such that at least one surface engaging portion can be moved relative to said body such that said surface engaging portions can be moved in opposite directions to apply a gripping force to said opposing surfaces of said beam;
at least one connecting portion for connecting said body to one or more elongate members.

By providing a bracket that engages opposing surfaces of a channel formed in a support member, such as a beam or pillar, the advantage is provided that sections of trunking and/or conduit can be attached to such a beam and be contained substantially or entirely within the channel of the beam. As a result, the likelihood of damage to objects or people passing close to the pillar is significantly reduced. Furthermore, the likelihood of the trunking or conduit being damaged is also significantly reduced. In clean environments, this is particularly important since damage to trunking conduit can increase the number of dirt traps and can also allow ingress of water into the regularly cleaned trunking, as a result of the damage. It is also the case that, the above described bracket is itself significantly easier to clean than those of the prior art, making it more suitable for use in clean environments.

In a preferred embodiment a surface engaging portion is fixedly connected to said body.

In another preferred embodiment the surface engaging portions comprise a pair of surface engaging portions each moveable relative to said body.

In a further preferred embodiment at least one surface engaging portion is connected to said body by a respective leg.

By making both surface engaging portions movable relative to the body, and particularly by doing so with a pair of movable legs, the advantage is provided that the bracket of the present invention can be used over a wide range of sizes of beam with significantly varying distances between the opposing surfaces of the beam.

In a preferred embodiment at least one leg comprises a threaded portion adapted to engage a reciprocal threaded portion formed in said body.

By using threaded portions to connect the body to the surface engaging portion, the advantage is provided that a simple mechanism is provided to alter the separation between the surface engaging portions.

The apparatus may further comprise at least one locking nut for engaging said threaded portion on said leg and locking said leg relative to said body.

By providing a locking nut, the advantage is provided that the position of the surface engaging portions, and therefore the force they are applying to the opposing surfaces of the support beam, can be fixed and will not alter over time.

The apparatus may further comprise at least one cover extending at least partially over said body portion and at least partially over at least one leg portion.

In a preferred embodiment the cover is adapted to be cut to length to substantially cover the width of the channel between the opposing surfaces.

By providing a cover portion, and in particular one that can be cut to the required length, the advantage is provided that the apparatus of the present invention is particularly adaptable to using in many different sizes of beam whilst still providing a very high standard of hygiene and easy cleaning surfaces where the apparatus of the present invention is used in a clean environment. Furthermore, where a cover is used, the other components can be formed from less expensive and easier to work materials that are required for clean environments, since they are protected by the cover.

According to another aspect of the present invention, there is provided a construction apparatus comprising:-
at least one elongate member;
a plurality of apparatus for connecting said elongate member to a structural support member having a channel therein, as set out above; and
fixing means for fixing said elongate member to said apparatus.

In a preferred embodiment at least one said elongate member comprises a section of trunking and/or conduit.

Preferred embodiments of the present invention will now be described, by way of example only, and not in any limitative sense, with reference to the accompanying drawings in which:-
Figures 1 and 2 are perspective views of apparatus of the prior art;
Figure 3 is a perspective view of an apparatus of the present invention;
Figure 4 is a perspective view of the apparatus of Figure 3 in use on an I-beam, including a partial cut-away section of the beam;
Figure 5 is a perspective view of the apparatus of Figure 3 in use; and
Figure 6 is a perspective view of a portion of the apparatus of Figure 3.

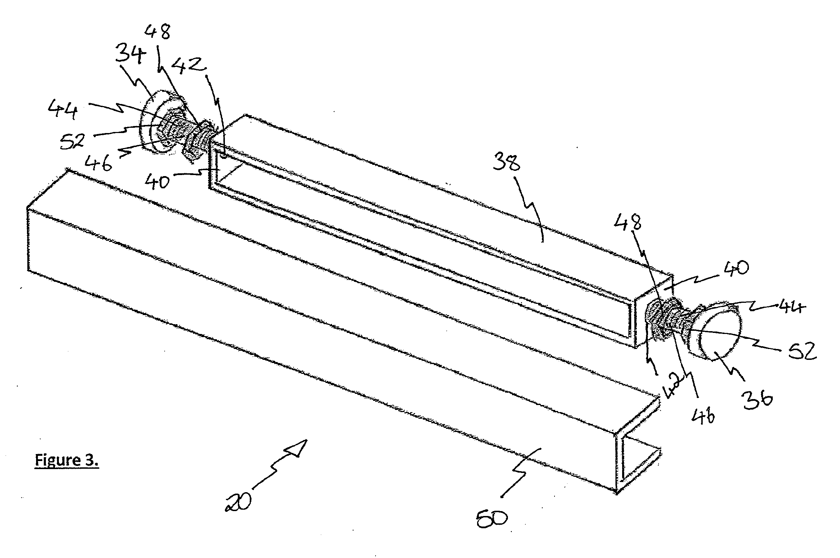

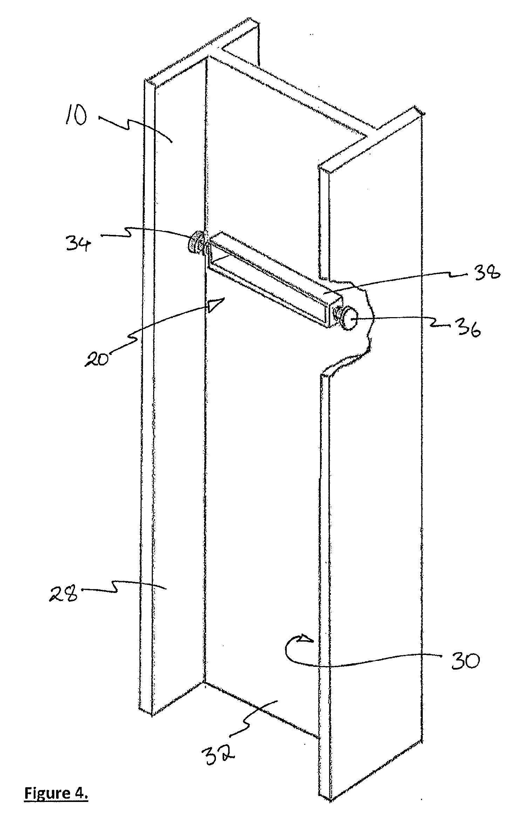

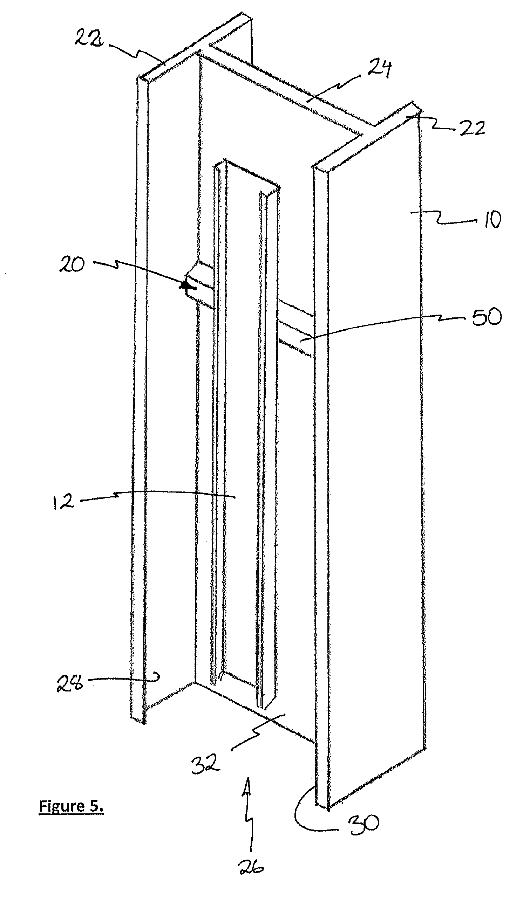

Referring to Figures 3 to 5, an apparatus, in the form of bracket 20 is used for connecting elongate members, such as trunking section 12, to a structural support beam 10. It should be note that throughout the present application the terms beam and pillar are used interchangeably. The present invention is suitable for use equally on beams and pillar, although would more commonly be used on vertically oriented pillars. The beam 10 shown in Figures 4 and 5 is a so-called I-beam having a pair of flanges 22 connected by a web 24. In this example, the beam is an I-beam because the web 24, when viewed in cross-section, is longer than either of the flanges 22. The present invention is equally applicable for use with other beams, for example an H-beam (where the flanges are longer than the web) or a U- or C-beam. In each of the examples, the beam is provided with a channel 26, extending along the length of the beam and formed from opposing surfaces 28 and 30 of the flanges and surface 32 of the web.

Bracket 20 includes a pair of surface engaging portions 34 and 36 that engage the opposing flange surfaces 28 and 30 in channel 26 of beam 10. Bracket 20 also has a body 38 that is formed from a piece of U-section steel that has had ends 40 attached thereto. Each end 40 has a threaded aperture 42 into which is received a leg 44 formed with a thread 46 that engages the thread in aperture 42.

Each leg 44 is fixedly connected to a surface engaging portion 34, 36, so that rotation of the surface engaging portion causes that portion to move towards or away from body 38. The legs 44 are preferably just less than half the length of the body 38 so as to provide the maximum adjustment between the smallest position, where the majority of the leg is contained within body 38, and the largest condition when the majority of the leg is external to body 38.Each leg 44 is also provided with a locking nut 48 that can be used to lock the position of the leg relative to body 38 by rotation of the locking nut so that it is engaged with end 40.

For attaching to bracket 20 there is provided a cover piece 50 which is a piece of U-section steel that attaches to and covers the body 38 as well as covering the legs 44 and surface engaging portions 34 and 36 of bracket 20.

Use of the brackets 20 will now be described. Body 38 is located between flange surfaces 28 and 30 in beam 10 and surface engaging portions 34 and 36 are rotated until they are almost in engagement with the flange surfaces. In order to provide sufficient gripping force, the legs 44 are further extended by rotation of surface engaging portions 34 and 36 by the use of a spanner in conjunction with hexagonal tool engaging portions 52 that are located immediately behind the surface engaging portions 34 and 36. The hexagonal engaging portions 52 of surface engaging portions 34 and 36 are rotated until sufficient force is being applied to the flange surfaces not only to hold the bracket 20 but also the trunking to be attached thereto. Once the bracket 20 is in place, the locking nuts 48 are rotated, typically using the same spanner as previously mentioned, until they are in locked engagement with ends 40 of body 38.

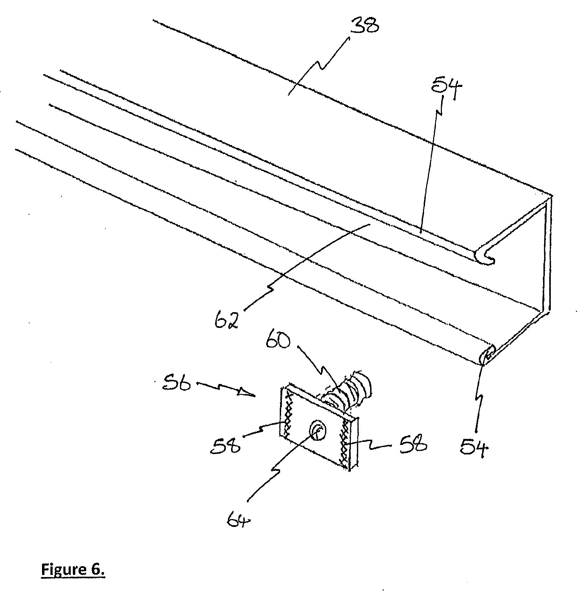

Cover 50 is then placed over the body 38, as well as legs 44 and surface engaging portions 34 and 36. The cover 50 is fixed into place by any suitable means, for example, body 38 can be formed from a length of U-section steel having a lip 54 along each edge as shown in Figure 6. This material, commonly referred to as "strut", has a rectangular sprung nut 56 inserted into the channel, in the orientation shown in Figure 6, and rotated by 90° so that the edges 58, which are generally formed with indentations, grip or cut into lips 54. The edges 58 are pressed into engagement with lips 54 by spring 60 which presses against rear wall 62 of body 38. The threaded aperture 64 in spring nut 56 receives bolts (not shown) that extend through apertures (also not shown) in the cover 50.

Trunking 12 or other elongate member is then attached to the bracket 20. Most typically several brackets are attached to the beam 10 and then the trunking 12 is attached to multiple brackets. The connection between trunking 12 and bracket 20 is by any suitable means. For example the cover 50 can be provided with threaded holes that receive bolts that extend through non-threaded holes in sections of trunking. Alternatively the non-threaded holes in the trunking 12 could be aligned with the holes in the cover 50 and bolts then engage the threaded apertures 64 in sprung nuts 56. As a further alternative the sprung nut 56 could be a sprung bolt that extends through a hole in the cover and/or trunking and a non-sprung nut attached thereto. Where the bracket is being used to hold sections of conduit or other tubing, devices such as conduit saddles or the like are fixed to the threaded holes in cover 50 or in sprung nut 56.

Depending upon the dimensions of the trunking and the dimensions of the beam, the trunking 12 can be recessed completely within the cross-sectional area of channel 26.

It will be appreciated by persons skilled in the art that the above embodiments have been described by way of example only and not in any limitative sense, and that the various alterations and modifications are possible without departure from the scope of the invention as defined by the appended claims. For example, the components described above are preferably made from stainless steel. However, any other suitably strong material could also be used. Furthermore, some non-structural components, for example cover 50, may be formed from material such as plastic. It is also the case that the surface engaging portions 34 and 36 may be coated with a suitable material to provide additional grip when pressed into engagement with the surfaces 28 and 30 of channel 26.

As a further alternative, one end of the body 38 could be provided without the leg 44 and the surface engaging portion formed directly or stuck directly to the end 40. The other surface engaging portion would be adjustable as described above and would therefore provide sufficient adjustment. Furthermore, in environments where easy clean surfaces are not paramount, the cover 50 could be excluded and the bracket 20 still operate to carry the trunking 12.

## Claims

1. An apparatus for connecting elongate members to a structural support member having a channel therein, the apparatus comprising:-
surface engaging portions for engaging opposing surfaces of a channel formed in a structural support member;
at least one body portion connected to said surface engaging portion such that at least one surface engaging portion can be moved relative to said body such that said surface engaging portions can be moved in opposite directions to apply a gripping force to said opposing surfaces of said beam;
at least one connecting portion for connecting said body to one or more elongate members.

2. An apparatus according to claim 1, wherein a surface engaging portion is fixedly connected to said body.

3. An apparatus according to claim 1, wherein said surface engaging portions comprise a pair of surface engaging portions each moveable relative to said body.

4. An apparatus according to any of the preceding claims, wherein at least one surface engaging portion is connected to said body by a respective leg.

5. An apparatus according to claim 4, wherein at least one leg comprises a threaded portion adapted to engage a reciprocal threaded portion formed in said body.

6. An apparatus according to claim 5, further comprising at least one locking nut for engaging said threaded portion on said leg and locking said leg relative to said body.

7. An apparatus according to any of the preceding claims, further comprising at least one cover extending at least partially over said body portion and at least partially over at least one leg portion.

8. An apparatus according to claim 7, wherein said cover is adapted to be cut to length to substantially cover the width of the channel between the opposing surfaces.

9. A construction apparatus comprising:-
at least one elongate member;
a plurality of apparatus for connecting said elongate member to a structural support member having a channel therein, according to any of the preceding claims; and
fixing means for fixing said elongate member to said apparatus.

10. An apparatus according to claim 10, wherein at least one said elongate member comprises a section of trunking and/or conduit.
